# EUROPÄISCHE PATENTSCHRIFT

(11) **EP 2 500 381 B1**
(45) Veröffentlichungstag und Bekanntmachung des Hinweises auf die Patenterteilung: **18.12.2013**
(21) Anmeldenummer: 12157629.2
(22) Anmeldetag: 01.03.2012
(51) Int. Cl.: C08L 55/02, C08L 83/04

(54) **Hydrophobes ABS Kunststoffmaterial für Gehäuse**
Hydrophobic ABS plastic material for housing
Matériau en matière synthétique ABS hydrophobe pour boîtiers

(30) Priorität: 16.03.2011 DE 102011005630
(43) Veröffentlichungstag der Anmeldung: 19.09.2012
(73) Patentinhaber: Siemens Medical Instruments Pte. Ltd., Singapore 139959 (SG)
(72) Erfinder: Beck, Daniela, Dr., 91056 Erlangen (DE); Berndt, Anett, 91058 Erlangen (DE); Eder, Florian, Dr., 91052 Erlangen (DE)
(74) Vertreter: Maier, Daniel Oliver

(56) Entgegenhaltungen:
- EP-A1- 0 022 979
- EP-A2- 0 196 092
- EP-A2- 0 388 231
- EP-A2- 0 728 809
- JP-A- 10 046 003
- JP-A- 56 016 552
- KR-A- 20070 007 535
- US-A- 4 248 778
- US-A1- 2004 192 846
- US-A1- 2006 142 486

## Beschreibung

Die Erfindung betrifft ein Hörgerät, dessen Gehäuse- ein hydrophobes ABS Kunststoffmaterial aufweist.

Acrylnitril-Butadien-Styrol-Copolymerisat (Kurzzeichen ABS) ist ein Kunststoff mit hoher Oberflächenhärte für kratzfeste und mattglänzende Oberflächen und besitzt eine gute Schlagfestigkeit. Es wird verwendet für die Herstellung von Gehäusen, insbesondere Gehäuse von Elektrogeräten.

Elektrogeräte, z.B. Hörgeräte, Mobiltelephone und ähnliche, sind während des täglichen Gebrauchs Schmutz, Feuchtigkeit und Schweiß ausgesetzt. Feuchtigkeit, die in das Gerät eindringt und elektronische Bauteile erreicht, kann zu Korrosion und letztendlich zur Beschädigung der Bauteile, ja sogar zum Ausfall des Gerätes führen. Daher ist es bekannt, an der Oberfläche einzelne Geräte-Bauteile oder ganze Gehäuse mit einer feuchtigkeits- und/oder schmutzabweisenden Schutzschicht zu versehen. Die Wirkung ist dann am besten, wenn alle Gehäusekomponenten mit einer entsprechenden Oberfläche versehen sind.

Da Gerätegehäuse meist aus verschiedenen Kunststoffteilen bestehen, können Flüssigkeiten durch Fugen zwischen den Gehäuseteilen eindringen und werden durch Kapillarkräfte in das Gerät gesogen. Die Benetzungseigenschaften des Gehäusematerials können durch den Wasserkontaktwinkel (water contact angle, WCA) und durch den Rückzugswinkel (receding contact angle, RCA) beschrieben werden. Bei geringen Wasserkontaktwinkeln (z.B.0-45°) bezeichnet man die Oberfläche als hydrophil, bei Winkeln um 90° als hydrophob und bei noch größeren Winkeln als superhydrophob. Durch Oberflächenbehandlung kann der Kontaktwinkel verändert werden. Der Rückzugswinkel ist als Maß für die Entnetzungseigenschaften einer Oberfläche zu sehen und gibt Auskunft über einfache Handhabung bei der Reinigung. Dieser Wert beschreibt die Kraft oder Energie, die erforderlich ist, um eine Substantz, die bereits auf der entsprechenden Oberfläche angehaftet war, wieder zu entfernen. Er ist meist etwas geringer als der Wasserkontaktwinkel, aber auch hier gilt, je hydrophober das Material, desto größer ist meist Rückzugswinkel.

Obwohl die Oberflächeneigenschaften von ABS anfänglich eine ausreichende Hydrophobizität des Gehäusematerials ermöglichen (WCA ca. 75°, RCA ca. 50°), verschlechtern sich die Oberflächeneigenschaften in einer feuchten Umgebung (RCA < 20) oder bei Kontakt mit Schweiss (RCA < 30)rasch.

Zur Verbesserung der Oberflächeneigenschaften ist aus der Druckschrift EP 1 432 281 A2 ein Hörgerät bekannt, bei welchem Bestandteile des Gehäuses mit einer hydrophoben und/oder oleophoben und/oder Biofilm-hemmenden Beschichtung versehen sind.

Die Beschichtung einzelner Gehäuseteile führt jedoch zu einem komplexen Herstellungsprozess und ist nicht für alle Bauteile möglich, da bestimmte Verfahrensschritte bei der Herstellung, wie z.B. Kleben, Lackieren oder Bedrucken, auf hydrophoben Oberflächen unmöglich sind. Auch das Aufbringen der Beschichtung erfordert zusätzliche Bearbeitungsschritte (z.B. Beschichten, Trocknen, Härten) und entsprechende spezielle Produktionsanlagen. Ferner sind Beschichtungen nachteilig, da sie durch mechanische Beanspruchung (Reibung) wieder entfernt werden können.

Aufgabe der Erfindung ist es daher, ein Hörgerät, dessen Gehäuse ein hydrophobes ABS Kunststoffmaterial aufweist, durch welches empfindliche elektronische Bauteile in einem Gehäuse vor Feuchtigkeit geschützt werden, bereitzustellen.

Diese Aufgabe wird durch ein Hörgerät, dessen Gehäuse eine Zusammensetzung nach Anspruch 1 aufweist gelöst.

Die Erfindung betrifft ein Hörgerät, dessen Gehäuse eine Zusammensetzung aufweisend ABS-Kunststoff und ein Silikonadditiv aufweist.

Ein ABS Kunststoff ist ein Kunststoff, der aus einem Acrylnitril-Butadien-Styrol-Copolymerisat besteht.

Das Silikonadditiv weist ein Polyorganosiloxan auf. Polyorganosiloxane werden auch allgemein als "Polysiloxane", "Silikonkunststoffe" oder "Silikone" bezeichnet.

Das Polyorganosiloxan kann mit einem weiteren Polymer copolymerisiert sein (sogenanntes Polysiloxan-Copolymer).

Bevorzugt betrifft die Erfindung eine Zusammensetzung, wobei das Silikonadditiv ein Polyorganosiloxan mit Seitenketten aufweist, die unabhängig voneinander gewählt sind aus der Gruppe bestehend aus
unsubstituierte Alkylgruppe, unsubstituierte Alkenylgruppe, substituierte Alkylgruppe, und substituierte Alkenylgruppe,
wobei eine substituierte Alkylgruppen oder Alkenylgruppe mindestens einen Substituenten aufweist,
der aus der Gruppe gewählt ist, die aus Hydroxylgruppe (-0H), Epoxidgruppe, Ethergruppe (-(CH2)nOR) oder primäre Aminogruppe (-NH2) oder sekundäre Aminogruppe (-NHR) besteht.

Das Polyorganosiloxan kann die in folgender Formel angegebene Struktur aufweisen: 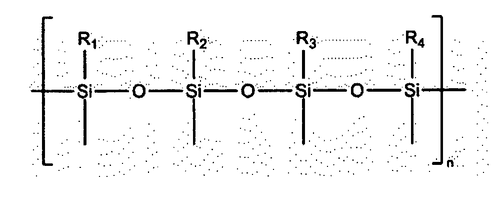 wobei R1, R2, R3 und R4 Seitenketten sind, die unabhängig voneinander gewählt sind aus der Gruppe bestehend aus unsubstituierte Alkylgruppe, unsubstituierte Alkenylgruppe, substituierte Alkylgruppe, und substituierte Alkenylgruppe,
wobei eine substituierte Alkylgruppen oder Alkenylgruppe mindestens einen Substituenten aufweist, der aus der Gruppe gewählt ist, die aus Hydroxylgruppe (-0H), Epoxidgruppe, Ethergruppe (-(CH2)nOR) oder primäre Aminogruppe (-NH2) oder sekundäre Aminogruppe (-NHR) besteht.

Gemäß der oben gezeigten Strukturformel sind die Silizium-Atome mit Methylgruppem (-CH3) abgesättigt, sofern sie nicht an Sauerstoff oder an einen der Seitenketten R1 bis R4 gebunden sind.

Gemäß einem Aspekt der Erfindung ist es bevorzugt, dass R1, R2, R3 und R4 eine identische Seitenkette bezeichnen.

Gemäß einem Aspekt der Erfindung ist es bevorzugt, dass jeweils R1, und R3 eine identische Seitenkette sowie R2 und R4 eine identische Seitenkette bezeichnen.

Gemäß einem Aspekt der Erfindung ist es bevorzugt, dass die Silikonetherkette des Silikonadditivs mit jeweils mit einer Seitenkette gemäß einer der Seitenketten von R1 bis R4 terminiert ist.

Gemäß einem Aspekt der Erfindung ist es bevorzugt, dass das Silikonadditiv einen Gewichtsanteil von ≤ 20 Gew.% aufweist. Es ist besonders dass das Silikonadditiv einen Gewichtsanteil von ≤ 10 Gew.% aufweist.

Es ist besonders dass das Silikonadditiv einen Gewichtsanteil von 2-6 Gew.% aufweist. Bei diesem Gewichtsanteil des Silikonadditivs ergibt sich eine ausreichende Verbesserung der hydrophoben Eigenschaften der Zusammensetzung bei gleichzeitig niedrigen Gesamtkosten.

Gemäß einem Aspekt der Erfindung ist es bevorzugt, dass das Silikonadditiv ein Polyorganosiloxan ist, das ausgewählt ist aus der Gruppe, die aus Polyorganosiloxanen mit einer der in den folgenden Formeln angegebenen Strukturen besteht:

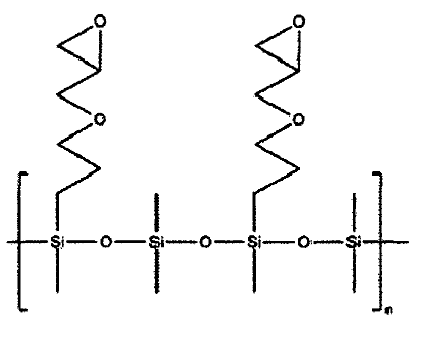

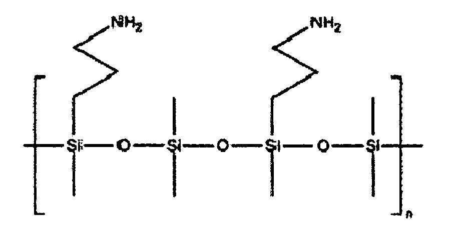

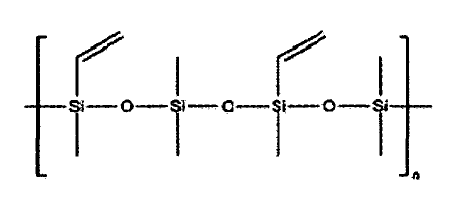

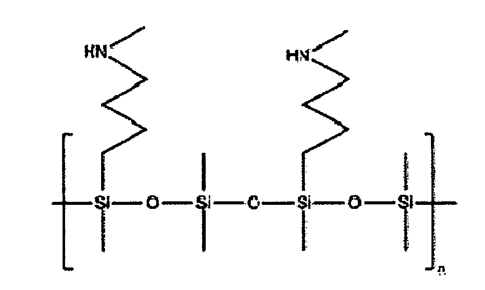

Gemäß der oben gezeigten Strukturformeln sind die Silizium-Atome mit Methylgruppem (-CH3) abgesättigt, sofern sie nicht an Sauerstoff oder an eine näher bezeichnete Seitenketten gebunden sind.

Gemäß einem Aspekt der Erfindung ist es bevorzugt, dass das Molekulargewicht des Polyorganosiloxans ≤ 5000 ist. Bei diesem Gewichtsanteil des Silikonadditivs ergibt sich eine ausreichende Verbesserung der hydrophoben Eigenschaften der Zusammensetzung bei gleichzeitig niedrigen Gesamtkosten.

Gemäß einem Aspekt der Erfindung ist es bevorzugt, dass die Anzahl der Si-O- Einheiten im Polyorganosiloxan ≤ 70 ist.

Die erfindungsgemäße Zusammensetzung kann weitere Additive aufrweisen, z.B. Farbstoffe, Fließmittel u.ä..

Gemäß einem Aspekt der Erfindung ist es bevorzugt, dass das Silikonadditiv zu einem ABS Kunststoff-Rohmaterial hinzugefügt wird und gemeinsam mit dem ABS Kunststoff-Rohmaterial erwärmt und extrudiert wird.

Ferner betrifft die Erfindung eine Verwendung der erfindungsgemäßen Zusammensetzung zur Herstellung eines hydrophoben Gehäusematerials zur Herstellung eines Hörgerätegehäuses.

Die Erfindung betrifft ein Hörgerät mit einem Gehäuse welches die erfindungsgemäße Zusammensetzung aufweist.

Anstatt ein Kunststoffgehäuse zu beschichten, basiert die Erfindung auf der Überlegung, zu dem ABS Kunststoff-Rohmaterial für ein Gehäuse ein mit dem ABS Kunststoff kompatibles Additiv hinzuzufügen, um die erfindungsgemäße Zusammensetzung mit verbesserten hydrophoben Eigenschaften zu erhalten.

Dabei hat sich herausgestellt, dass insbesondere die gemäß der Erfindung verwendeten Silikonadditive mit dem ABS RohMaterial kompatibel sind und ferner geeignet sind, die gewünschten Materialeigenschaften zu erzielen.

Die verwendeten Polyorgaosiloxane haben bevorzugt die folgende Struktur:

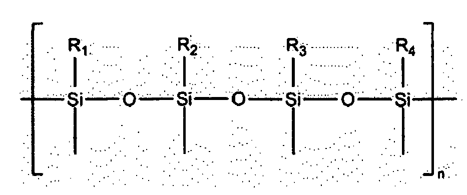

R1, R2, R3 und R4 stellen dabei aliphatische gesättigte oder ungesättigte Kohlenwasserstoff-Seitenketten dar. Die Seitenketten können substituiert sein z.b. mit Hydroxylgruppen (-0H), Epoxidgruppen, Ethergruppen (-(CH2)nOR) oder ein primäres Amin (-NH2) oder sekundäres Amin (-NHR)oder eine Vinylgruppe aufweisen.

Gemäß der oben gezeigten Strukturformeln sind die Silizium-Atome mit Methylgruppem (-CH3) abgesättigt, sofern sie nicht an Sauerstoff oder an eine näher bezeichnete Seitenketten gebunden sind.

Sie können jeweils einfach oder mehrfach substituiert sein.

R1 bis R4 können identisch oder jeweils unterschiedlich sein.

Das Polyorgaosiloxan kann 2, 3 oder 4 unterschiedliche Seitenketten des oben beschriebenen Typs aufweisen, diese können sich regelmäßig (z.b. aabb, abab, aabbcc, abcabc) oder unregelmäßig abwechseln.

Ein bevorzugtes Polyorgaosiloxan ist Polydimethylsiloxan.

Die Seitenketten können zur Vernetzung mit dem Polymer genutzt werden, wie in der folgenden Strukturformel dargestellt, wobei in dieser Strukturformel R1 das ABC Polymer bezeichnet:

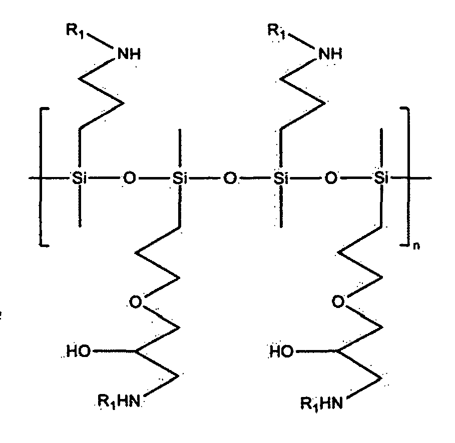

Gemäß der oben gezeigten Strukturformeln sind die Silizium-Atome mit Methylgruppem (-CH3) abgesättigt, sofern sie nicht an Sauerstoff oder an eine näher bezeichnete Seitenketten gebunden sind.

In diesem Beispiel trägt die Silikon-Hauptkette abwechselnd eine Seitenkette mit einer Aminogruppe und einer Epoxidgruppe.

Überraschend wurde gefunden, dass sich Polyorganosiloxane als Additive für ABS Kunststoff eignen und dessen hydrophobe Eigenschaften verbessern. Dadurch ist die erfindungsgemäße Zusammensetzung insbesondere zur Verwendung von Gehäusen für feuchtigkeitsempfindliche Geräte, insbesondere Elektrogeräte besonders gut geeignet.

Das Gerätegehäuse hat die unter Anderem die Aufgabe, das Geräteinnere gegenüber Umwelteinflüssen zu schützen. Dies ist insbesondere von Bedeutung bei Geräten die unter besonderen Bedingungen eingesetzt werden, z.B. im Außeneinsatz oder am Körper getragene Geräte. Beispiele hierfür sind Mobiltelefone, Hörgeräte, tragbare MP3 Player, Kameras, Computer und ähnliche Geräte.

Die Erfinder haben überraschend gefunden, dass sich die erfindungsgemäße Zusammensetzung für derartige Einsatzzwecke eignet, da das Gehäusematerial langfristig feuchtigkeitsabweisend bleibt.

Die Silikon-Hauptkette des trägt zur gewünschten Verbesserung der hydrophoben Eigenschaften bei.

Dadurch ist die erfindungsgemäße Zusammensetzung besonders für Hörgerätegehäuse geeignet, da Hörgeräte am Körper getragen werden und somit mit Feuchtigkeit, Schweiss, Körperpflege- oder Kosmetikprodukten, Cerumen (Ohrenschmalz) in Kontakt kommen. Es hat sich gezeigt, dass die erfindungsgemäße Zusammensetzung gegenüber diesen Substanzen besonders resistent ist und dass sich die hydrophoben Eigenschaften des Gehäusematerial über einen viel längeren Zeitraum erhalten lassen.

Durch Verwendung des Silikonadditivs können die hydrophoben Eigenschaften (gemessen durch WCA and RCA) langfristig verbessert werden, d.h. der Kunststoff behält diese Eigenschaften deutlich länger bei, als ohne Verwendung des Silikonadditivs. Im Gegensatz zu den bekannten Verfahren zur Oberflächenbehandlung sind bei der Herstellung des ABS Kunststoffmaterials mit Silikonadditiv keine zusätzlichen Bearbeitungsschritte notwendig. Das Silikonadditiv kann z.B. vor dem Extrudieren zugegeben werden, z.B. während des Compoundierens. Das Silikonadditiv kann auch direkt vor dem Durchführen des Spritzgußverfahrens zugegeben werden. Die Materialkosten für derartige Silikonadditive sind gering (<20 USD per kg) so dass die Gesamtkosten niedrig gehalten werden können. Bereits bestehende Produktionsprozesse und -anlagen können weiter genutzt werden.

Ein beispielhafter Herstellungsprozess kann mit folgenden Bedingungen durchgeführt werden:
Compundierparameter:
   Schneckendurchmesser: 25mm, L/D 40
   Zylindertemperaturen: 230°C
   Schneckendrehzahl: 250U/min
   Durchsatz: 8kg/h
   Drehmoment: ca. 25-30%
   2,5 Gew.% bis 6 Gew.% Silikonadditiv.

Das Additiv wird dem fertigen Kunststoff hinzugefügt. Der Zeitpunkt der Zugabe, also entweder beim Spritzguss selbst, oder beim Compoundieren vorher, ist egal.

Zur Untersuchung der hydrophoben Eigenschaften wurden WCA- und RCA-Werte von ABS Kunststoff ohne Silikonadditiv, ABS Kunststoff mit 6 Gew% Polysiloxan-Poyester Copolymer und ABS Kunststoff mit 2,5 Gew% Polyaminoorganosiloxan und 4 Gew.% Polysiloxan-Poyester Copolymer bestimmt.

Der WCA-Wert von ABS Kunststoff ohne Silikonadditiv lag bei ca. 75°, bei ABS Kunststoff mit 6 Gew% Polysiloxan-Poyester Copolymer und ABS Kunststoff mit 2,5 Gew% Polyaminoorganosiloxan und 4 Gew.% Polysiloxan-Polyester Copolymer betrug er jeweils ca. 85°.

Der RCA-Wert von ABS Kunststoff ohne Silikonadditiv lag bei ca. 50°, bei ABS Kunststoff mit 6 Gew% Polysiloxan-Poyester Copolymer betrug der RCA-Wert ca. 60°, und ABS Kunststoff mit 2,5 Gew% Polyaminoorganosiloxan und 4 Gew.% Polysiloxan-Poyester Copolymer betrug der RCA-Wert ca. 75°.

Nach verschiedenen Behandlungen einer Kunststoffprobe, z.B. 40°C bei 100% relativer Luftfeuchtigkeit, Behandlung mit Sonnencreme, Aftershave, diversen Temperatur- und Feuchtigkeitszyklen, sowie Behandlung durch Abrieb zeigte sich, dass der ABS Kunststoff ohne Silikonadditiv eine deutliche Verschlechterung der hydrophoben Eigenschaften aufwies (Abnahme des RCA-Wertes) während bei ABS Kunsstoff mit den getesteten Silikonadditiven die hydrophoben Eigenschaften erhalten blieben.

Nach einer Behandlung mit 40°C bei 100% relativer Luftfeuchtigkeit für 3 Wochen sank der RCA Wert des ABS Kunststoffs ohne Silikonadditiv von ca. 50° auf ca. 15°.

Bei ABS Kunststoff mit 6 Gew% Polysiloxan-Poyester Copolymer hingegen sank der RCA-Wert von ca. 60°auf nur ca. 50 - 55°nach einer Behandlung mit 40°C bei 100% relativer Luftfeuchtigkeit für 3 Wochen.

Bei ABS Kunststoff mit 2,5 Gew% Polyaminoorganosiloxan und 4 Gew.% Polysiloxan-Poyester Copolymer sank der RCA-Wert von ca. 75° auf nur ca. 65° nach einer Behandlung mit 40°C bei 100% relativer Luftfeuchtigkeit für 3 Wochen.

## Patentansprüche

1. Hörgerät, dessen Gehäuse eine Zusammensetzung aufweist, die ABS-Kunststoff und ein Silikonadditiv aufweist.

2. Hörgerät nach Anspruch 1, wobei das Silikonadditiv ein Polyorganosiloxan mit Seitenketten aufweist, die unabhängig voneinander gewählt sind aus der Gruppe bestehend aus
unsubstituierte Alkylgruppe, unsubstituierte Alkenylgruppe, substituierte Alkylgruppe, und substituierte Alkenylgruppe,
wobei eine substituierte Alkylgruppen oder Alkenylgruppe mindestens einen Substituenten aufweist, der aus der Gruppe gewählt ist, die aus Hydroxylgruppe (-OH), Epoxidgruppe, Ethergruppe (-(CH2)nOR) oder primäre Aminogruppe (-NH2) oder sekundäre Aminogruppe (-NHR) besteht.

3. Hörgerät nach Anspruch 1 oder 2, wobei das Silikonadditiv einen Gewichtsanteil von ≤ 20 Gew.% aufweist.

4. Hörgerät nach einem der vorangehenden Ansprüche 2 oder 3, wobei das Molekulargewicht des Polyorganosiloxans ≤ 5000 ist.

5. Hörgerät nach einem der vorangehenden Ansprüche 2 bis 4, wobei die Anzahl der Si-O- Einheiten im Polyorganosiloxan ≤ 70 ist.

## Claims

1. Hearing aid, the casing of which comprises a composition which comprises ABS plastic and a silicone additive.

2. Hearing aid according to Claim 1, where the silicone additive comprises a polyorganosiloxane having side chains which have been selected independently of one another from the group consisting of
unsubstituted alkyl group, unsubstituted alkenyl group, substituted alkyl group, and substituted alkenyl group,
where a substituted alkyl group or alkenyl group has at least one substituent selected from the group consisting of hydroxy group (-OH), epoxy group, ether group (-(CH2)nOR), or primary amino group (-NH2), or secondary amino group (-NHR).

3. Hearing aid according to Claim 1 or 2, where the proportion by weight of the silicone additive is ≤ 20% by weight.

4. Hearing aid according to either of the preceding Claims 2 and 3, where the molecular weight of the polyorganosiloxane is ≤ 5000.

5. Hearing aid according to any of the preceding Claims 2 to 4, where the number of the Si-O- units in the polyorganosiloxane is ≤ 70.

## Revendications

1. Prothèse auditive dont le boîtier a une composition qui comprend de la matière plastique ABS et un additif de silicone.

2. Prothèse auditive suivant la revendication 1, dans lequel l'additif de silicone comprend un polyorganosiloxane à chaînes latérales, qui sont choisies indépendamment les unes des autres dans le groupe constitué de
des groupes alcoyle non substitués, des groupes alcényle non substitués, des groupes alcoyle substitués et des groupes alcényle substitués,
dans laquelle un groupe alcoyle substitué ou un groupe alcényle substitué a au moins un substituant qui est choisi dans le groupe constitué de groupe hydroxyle (-OH), de groupe époxyde, de groupe étheroxyde (-(CH2)nOR) ou de groupe amino primaire (-NH2) ou de groupe amino secondaire (-NHR).

3. Prothèse auditive suivant la revendication 1 ou 2, dans lequel l'additif de silicone est présent en une proportion en poids inférieure ou égale à 20% en poids.

4. Prothèse auditive suivant l'une des revendications 2 ou 3 précédentes, dans lequel la masse moléculaire du polyorganosiloxane est inférieure ou égale à 5000.

5. Prothèse auditive suivant l'une des revendications 2 à 4 précédentes, dans lequel le nombre des motifs Si-O- dans le polyorganosiloxane est inférieur ou égal à 70.
